# EUROPÄISCHE PATENTANMELDUNG

(11) **EP 3 431 420 A1**
(43) Veröffentlichungstag der Anmeldung: **23.01.2019**
(21) Anmeldenummer: 17182423.8
(22) Anmeldetag: 20.07.2017
(51) Int. Cl.: B65G 47/08, B65G 54/02, B65G 47/32

(54) **GRUPPIERUNGSEINRICHTUNG FÜR PRODUKTREIHEN**

(71) Anmelder: Rotzinger AG, 4303 Kaiseraugst (CH)
(72) Erfinder: Muller, Christian, 68500 Berrwiler (FR)
(74) Vertreter: Braun, André jr.

(57) **Zusammenfassung**

Die Reihengruppierungseinrichtung (3) zum Bewegen von Produktreihen (12) relativ zu einer stehenden oder bewegten Unterlage (2) besteht aus zwei zu beiden Seiten der Unterlage umlaufenden Führungsbahnen (6) eines linearen Transportsystems (4, 5) mit individuell angetriebenen Mitnehmern (7). Je zwei aufeinander folgende Mitnehmer (7) sind paarweise durch eine Gelenkstange (8) miteinander verbunden und je zwei einander auf den Führungsbahnen (6) gegenüber positionierte Mitnehmerpaare sind quer über die Unterlage mechanisch miteinander verbunden.

## Beschreibung

Die Erfindung betrifft eine Reihengruppierungseinrichtung zum Bewegen von Produktreihen relativ zu einer stehenden oder bewegten Unterlage.

Bei der Produktion von Stückgütern in der Lebensmittelindustrie, speziell bei Biscuits, oder anderen Produkten, die ankommend aus einem Ofen übernommen werden müssen gibt es zwei bekannte Problemstellungen. Da das Ende des Prozess- oder Ofenbands zumeist konstruktiv aus einer sehr grossen Endumlenkungstrommel besteht, an die ein nachfolgendes Förderband, z.B. das Hauptförderband einer Anlage, nicht spaltfrei herangeführt werden kann, müssen die zumeist kleinen Biscuits mittels einer Übergangsplatte auf das nachfolgende Hauptförderband transferiert werden. Die Produkte sind nicht aktiv förderbar, während sie sich auf der Übergangsplatte befinden. Man behilft sich oft damit, dass die Übergangsplatte derart schräg angeordnet wird, dass die Produkte rutschend auf das Nachfolgeband gelangen. Eine andere Variante besteht darin, dass immer die nachfolgende Reihe die gerade auf der Übergangsplatte liegende Reihe auf das nachfolgende Hauptband überschiebt. Bei beiden Varianten wird die bestehende Ordnung der Produkte innerhalb der Reihen und auch die Lage der Reihen zueinander gestört. Diese systematische Unordnung im Reihenbild ergibt gravierende Nachteile für den nachfolgenden Verpackungsprozess.

Häufig müssen zusätzlich die frisch produzierten Produktreihen in eine andere Anordnung zueinander und in eine andere Geschwindigkeit überführt werden, damit die Anforderungen für den nachfolgenden Verpackungsprozess erfüllt werden können. Dies wird immer nachfolgend mit einer Anzahl von bestimmten Bändern und Ausrichteinrichtungen gemacht.

Es ist die Aufgabe der Erfindung die Problemstellung aus dem Stand der Technik bei der Übernahme der Produktreihen zu lösen und zudem noch die weiteren Anforderungen bezüglich der Änderung von Anordnung und Geschwindigkeit der Produktreihen für den Verpackungsprozess zu erfüllen.

Erfindungsgemäss wird dies erreicht durch eine Gruppierungseinrichtung mit den kennzeichnenden Merkmalen des Anspruchs 1.

Im Folgenden wird anhand der beiliegenden Zeichnungen ein bevorzugtes Ausführungsbeispiel der Erfindung beschrieben. Es zeigen
- Fig. 1: eine schematische Schnittdarstellung einer Gruppierungseinrichtung zur Überführung von Produkten von einem Prozessband P auf ein Hauptförderband V
- Fig. 2: eine Draufsicht auf die in Fig. 1 gezeigte Gruppierungseinrichtung
- Fig. 3: eine schematische Schnittdarstellung einer Gruppierungseinrichtung zur Umgruppierung von Produktreihen im Bereich eines normalen Übergangs von einem Band auf ein nachfolgendes
- Fig. 4: eine Draufsicht auf die in Fig. 4 gezeigte Gruppierungseinrichtung
- Fig. 5: eine schematische Schnittdarstellung entlang der Ebene A-A in Fig. 1
- Fig. 6 bis: Fig. 23 Beispiele von unterschiedlichen mit der erfindungsgemässen Gruppierungseinrichtung möglichen Umgruppierungsvarianten
- Fig. 24: eine schematische Schnittdarstellung einer Gruppierungseinrichtung zur Überführung von Produkten von einem Prozessband P auf ein tiefer liegendes Hauptförderband V

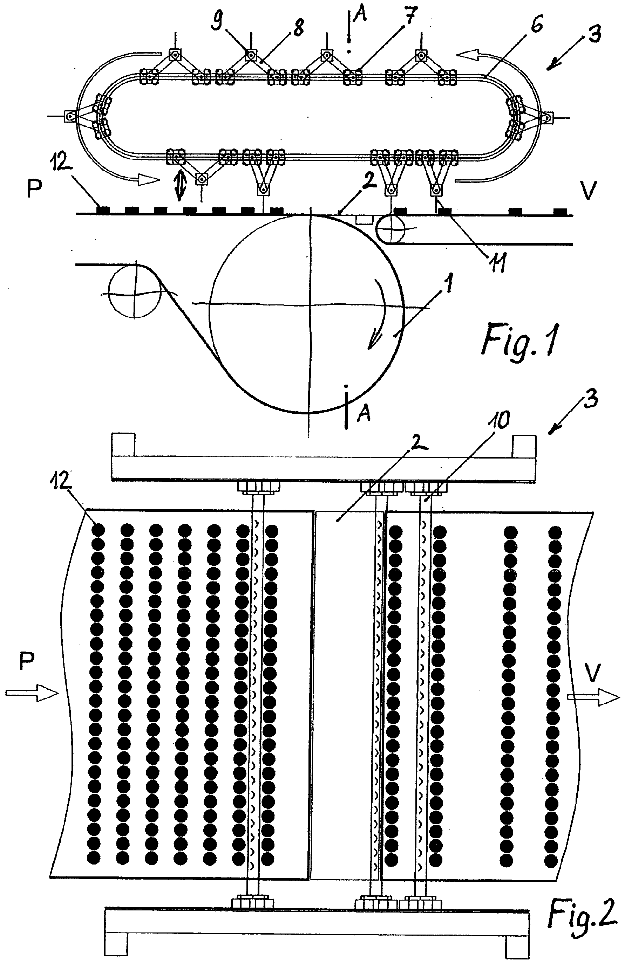

Wie in Fig. 1 gezeigt, endet ein Prozess- oder Ofenband P mit einer Endumlenkungstrommel 1 mit grossem Durchmesser. Ein zwischen diesem Prozessband und einem nachfolgenden Hauptförderband V bestehender Abstand ist durch eine Übergangsplatte 2 überbrückt.

Ein aktives Fördern der Produktreihen 12 erfolgt durch eine oberhalb der Bänder angeordnete Gruppierungseinrichtung 3 welche hinter jeder Produktreihe eingreift, diese aktiv über die Übergangsplatte fördert und anschliessend auf dem Hauptförderband freigibt.

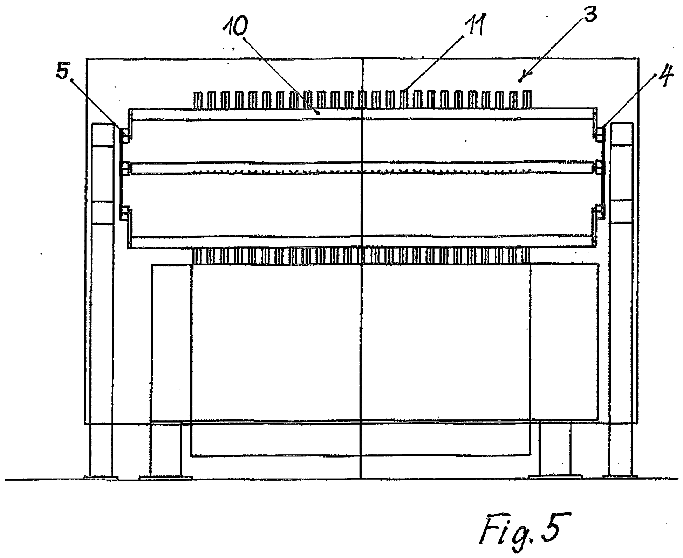

Die Gruppierungseinrichtung 3 besteht, wie besonders aus Fig. 5 ersichtlich, aus zwei an sich bekannten linearen Transportsystemen 4 und 5 die einander gegenüber und parallel zueinander zu beiden Seiten der Förderbahnen angeordnet sind.

Ein solches lineares Transportsystem wird beispielsweise unter der Bezeichnung "XTS eXtended Transport System" von der Firma Beckhoff auf dem Markt angeboten. Dieses System weist eine Anzahl von auf einer geschlossenen Führungsbahn 6 umlaufenden Mitnehmern 7, sog. Movern auf, die individuell angetrieben und gesteuert sind.

Für die Gruppierungseinrichtung gemäss der vorliegenden Erfindung ist die Steuerung der Mitnehmer so ausgelegt, dass sie sich synchron zueinander auf den Führungsbahnen bewegen, d.h. es befinden sich immer zwei zusammengehörende Mitnehmer exakt einander gegenüber.

Ausserdem gehören auf jeder der beiden Führungsbahnen je zwei aufeinander folgende Mitnehmer zusammen und sind durch eine gleichschenklige Gelenkstange 8 miteinander verbunden. Je nach dem Abstand der beiden aufeinander folgenden zusammengehörenden Mitnehmer ist das Mittelgelenk 9 der Gelenkstange höhenverstellbar.

Die einander gegenüber liegenden Mittelgelenke 9 der beiden Mitnehmerpaare auf den beiden Führungsschienen sind durch eine Quertraverse 10 verbunden. An der Unterseite der Quertraverse sind Ausrichtmittel 11, in der in Fig. 5 gezeigten Ausführung Ausrichtnocken, angebracht. In einer anderen Ausführungsvariante bestehen die Ausrichtmittel aus einer an der Quertraverse angebrachten und sich quer über das Band erstreckenden Ausrichtleiste. Durch die erwähnte Höhenverstellung wird auch die Quertraverse mit der Ausrichtleiste in der Höhe verstellt und zwar so, dass die Ausrichtleiste in ihrer tiefsten Position in eine Lücke zwischen zwei Produktreihen eintauchen kann. Durch synchrone Vorwärtsbewegung der beiden Mitnehmerpaare wird die Produktreihe über die Übergangsplatte geschoben und mit einer geeigneten Geschwindigkeit auf das nachfolgende Band übergeben.

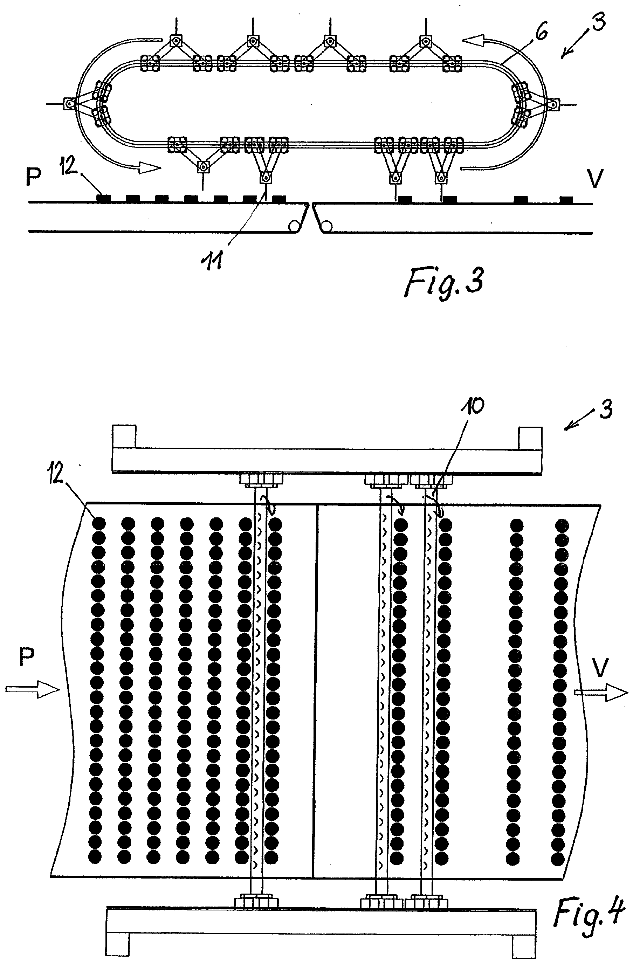

In der in den Fig. 3 und 4 gezeigten Situation ist die Gruppierungseinrichtung über einer Übergabestelle von einem Prozessband P auf ein schneller laufendes Hauptband V angeordnet und dient dort dazu, die ankommenden Produktreihen geschwindigkeitssynchron mit dem Hauptband auf dieses zu übergeben.

Generell kann ein beliebiger Fluss mit Stückgütern mit einem gegebenen Reihenbild über einen Bandübergang transferiert werden und dabei zu einem beliebigen Fluss mit einem differierenden Reihenbild moduliert werden.

Ein Produktestrom von regelmässig reihenförmig ankommenden Stückgütern bestehend aus Einzelreihen, Doppel - oder Mehrfachreihen oder Formationen mit gleichmässiger Geschwindigkeit muss von Band P auf Band V übergeben werden. Dabei müssen im Wesentlichen folgende Anforderungen erfüllt werden:
1. Die positionskonforme Übernahme von auf Band P ankommenden Produktreihen und die positionskonforme Übergabe der Produktreihen auf das nachfolgende Hauptband V.
2.Die geschwindigkeitskonforme synchronisierte Übernahme der auf Band P ankommenden Produktreihen und die geschwindigkeitskonforme synchronisierte Übergabe auf das nachfolgende Hauptband.

Es gibt auch unterschiedliche Anordnungen von Stückgutreihen, die auf dem Prozessband ankommen. Dies ist eine Folge des Produktionsprozesses. Man unterscheidet grundsätzlich zwei Hauptanordnungen. Dies ist zum einen ein regelmässiges Reihenbild bei dem alle Reihen die gleiche Anzahl an Produkten haben und alle Produkte innerhalb der Reihen zueinander die gleiche relative Lage haben. Hier ist eine durchgehende Lücke zwischen benachbarten Reihen quer zur Hauptförderrichtung vorhanden.

Dies ist zum anderen ist ein versetztes Reihenbild bei dem z. B. alternierend die Stückzahl der Produkte innerhalb der Reihen zueinander unterschiedlich ist und somit auch die relative Lage der Produkte von Reihe zu Reihe unterschiedlich ist. Hier ist typischerweise keine durchgehende Lücke zwischen benachbarten Reihen quer zur Hauptförderrichtung vorhanden. Grundsätzlich können die Produktreihen, die mit einem regelmässigen Reihenbild ankommen, mit einer quer zur Hauptförderrichtung über dem Bandübergang positionierten Ausrichtleiste übernommen werden. Hierfür wird die Ausrichtleiste auf die Geschwindigkeit des Prozessbands P aufsynchronisiert und simultan vertikal nach unten positioniert. Somit taucht dann die Ausrichtleiste in die vorhandene durchgehende Lücke zwischen benachbarten Reihen ein und kann dann die betreffende Reihe über die Übergangsplatte auf das nachfolgende Hauptband P schieben. Dabei ist es überlagert möglich jede Reihe individuell geschwindigkeitsmässig so zu modulieren, dass ein beliebiges Reihenbild auf dem nachfolgenden Hauptband erzeugbar wird.

Diese Übergabe ist auch mit einem versetzten Reihenbild möglich das auf dem Prozessband ankommt. Hierbei ist keine durchgehende Lücke zwischen benachbarten Reihen mehr vorhanden. Bei einer solchen Anordnung ist die Ausrichtleiste mit entsprechend geeigneten Nocken 10 bestückt, die dann quer zur Hauptförderrichtung vertikal nach unten in die vorhandenen Lücken zwischen benachbarten Produkten positioniert werden, um dann auch wieder jede Reihe individuell geschwindigkeitsmässig so zu modulieren, bzw. zu überschieben, sodass ein beliebiges Reihenbild auf dem nachfolgenden Hauptband erzeugbar wird.

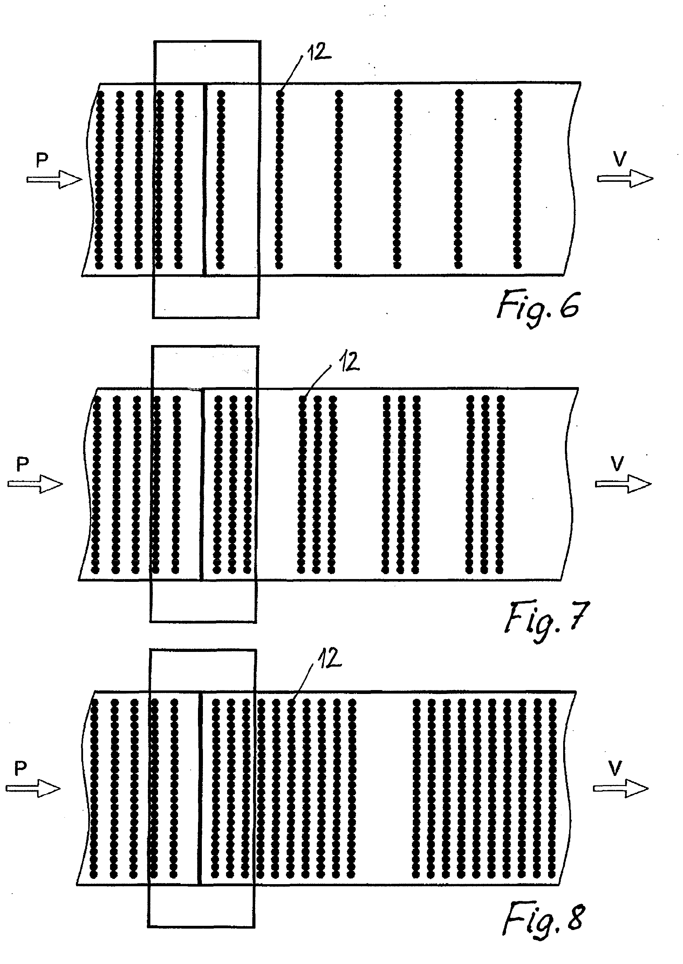

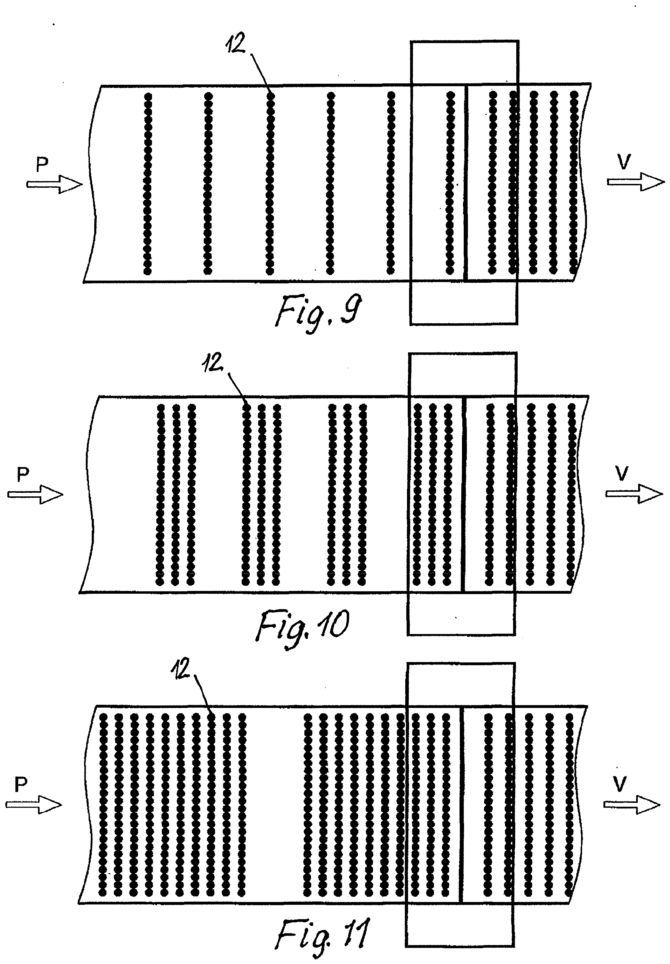

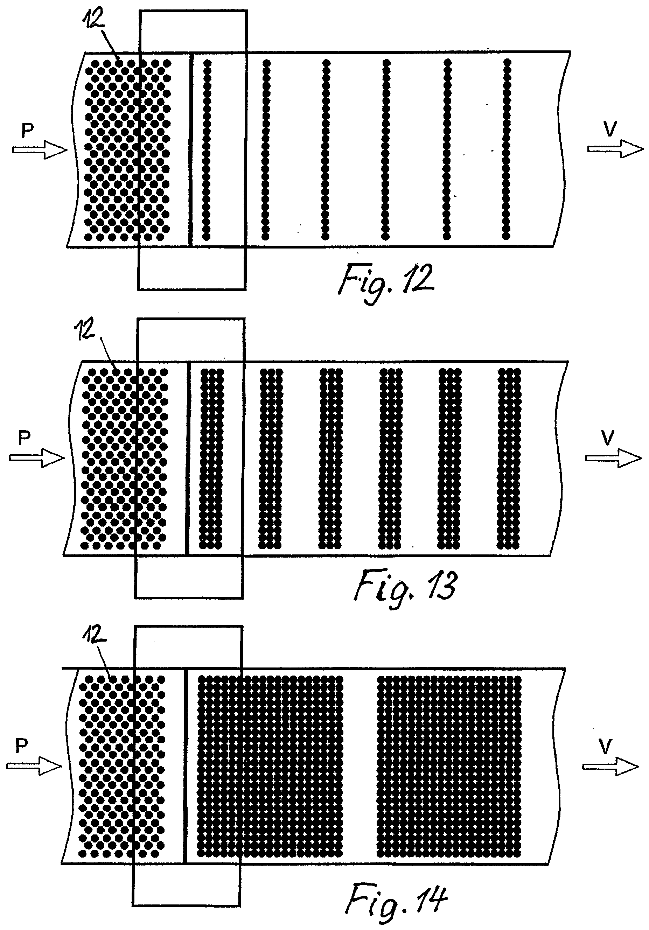

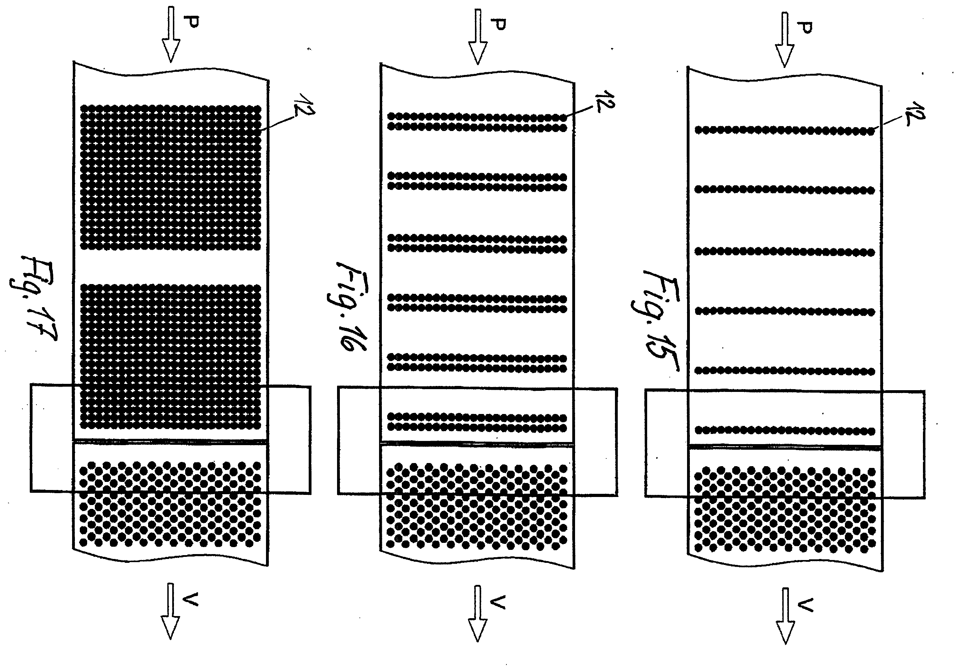

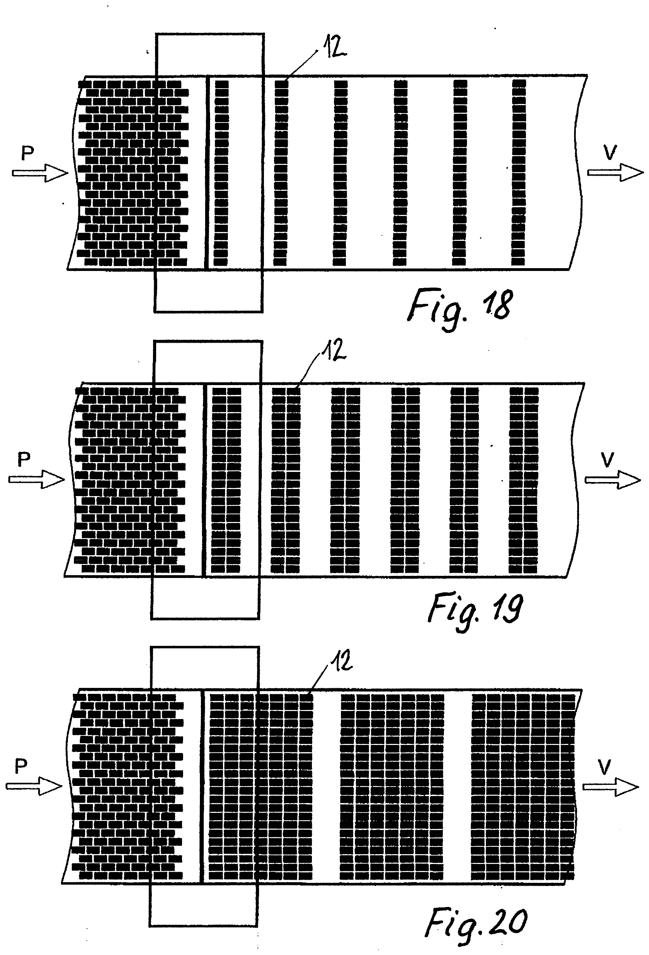

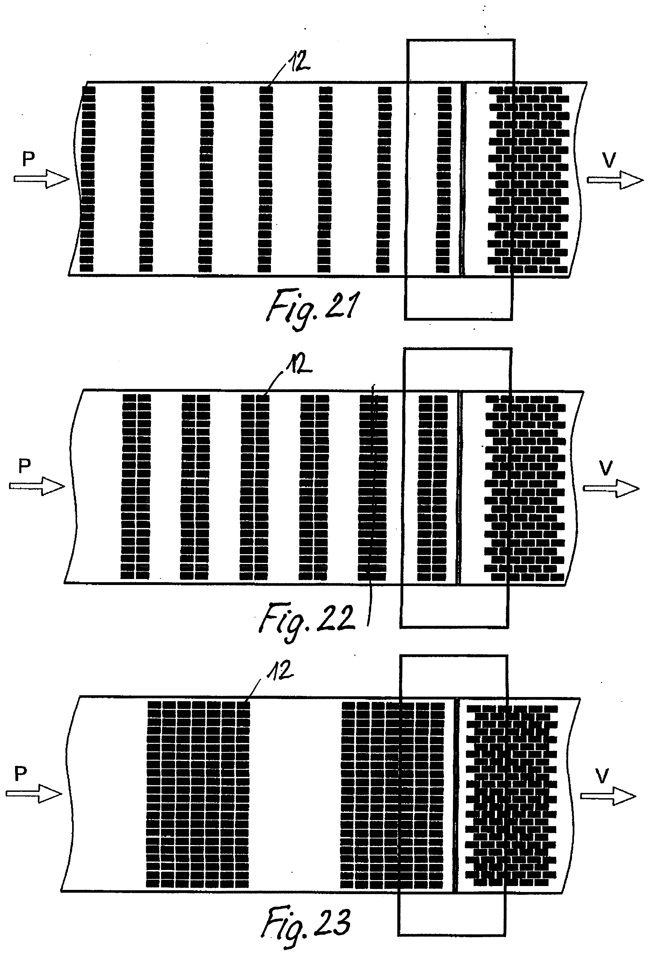

Neben der Übergabe von Produktreihen oder Formationen über einen Bandübergang z. B. von einem Ofenband P mit einem sehr grossen Umlenkdurchmesser auf ein nachgeschaltetes Förderband mit einem kleineren Umlenkdurchmesser ist mit der Gruppierungseinrichtung eine Vielzahl von unterschiedlichen Transfervarianten möglich. Einige dieser Transfermöglichkeiten sind in den Fig. 6-23 gezeigt

Transfer von auf Band P ankommenden Produktreihen oder Formationen von intermittierender Geschwindigkeit auf Band V mit gleichförmiger Geschwindigkeit. D. h. der mit intermittierender Geschwindigkeit ankommende Fluss an Produktreihen wird über den Bandübergang gefördert und in einen gleichmässigen kontinuierlichen Fluss mit konstanter Geschwindigkeit transferiert.

Transfer von auf Band P ankommenden Produktreihen oder Formationen von konstanter gleichförmiger Geschwindigkeit auf Band V mit intermittierender Geschwindigkeit. D. h. der mit konstanter Geschwindigkeit ankommende Fluss an Produktreihen wird über den Bandübergang gefördert und in einen intermittierenden getakteten Fluss mit variabler Geschwindigkeit transferiert.

Transfer eines gleichförmigen Produktestroms mit konstanter Geschwindigkeit aus zueinander versetzt ankommenden Stückgutreihen in einen gleichförmigen Strom aus zueinander ausgerichteten Reihen, Doppel- oder Mehrfachreihen oder Formationen.

Transfer eines gleichförmigen Produktestroms mit intermittierender Geschwindigkeit aus zueinander versetzt ankommenden Stückgutreihen in einen gleichförmigen Strom aus zueinander ausgerichteten Reihen, Doppel- oder Mehrfachreihen oder Formationen. Transfer eines gleichförmigen Produktestroms mit intermittierender Geschwindigkeit aus zueinander versetzt ankommenden Stückgutreihen in einen intermittierenden Strom aus zueinander ausgerichteten Reihen, Doppel- oder Mehrfachreihen oder Formationen.

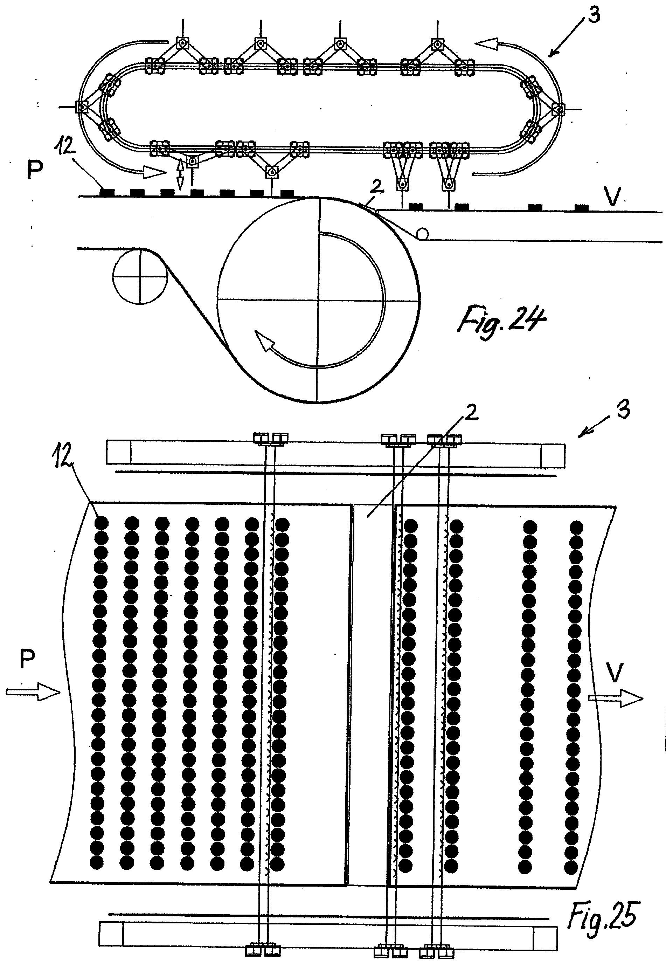

Während bei den bisher beschriebenen Ausführungsbeispielen die beiden Förderbänder P und V auf gleichem Niveau angeordnet sind, ist es, wie in den Fig. 24-25 gezeigt, mit der erfindungsgemässen Einrichtung auch möglich Produktreihen von einem Prozessförderband P auf ein Hauptförderband V zu transferieren, das sich auf einem anderen Niveau befindet als das Prozessförderband. Dabei kann das nachfolgende Band tiefer oder höher liegen als das vorangehende. Selbstverständlich gilt dies auch für den in den Fig. 3-4 gezeigten Übergang zwischen zwei Bändern.

## Patentansprüche

1. Reihengruppierungseinrichtung zum Bewegen von Produktreihen relativ zu einer stehenden oder bewegten Unterlage, **dadurch gekennzeichnet, dass** zu beiden Seiten der Unterlage je eine umlaufende Führungsbahn eines linearen Transportsystems mit individuell angetriebenen Mitnehmern angeordnet ist, dass je zwei aufeinander folgende Mitnehmer paarweise durch eine Gelenkstange miteinander verbunden sind und dass je zwei einander auf den Führungsbahnen gegenüber positionierte Mitnehmerpaare quer über die Unterlage mechanisch miteinander verbunden sind.

2. Reihengruppierungseinrichtung nach Anspruch 1, **dadurch gekennzeichnet, dass** die paarweise mechanisch gekoppelten Mitnehmer einer Führungsbahn durch eine Querverbindung (Quertraverse) zur anderen Führungsbahn miteinander verbunden sind.

3. Reihengruppierungseinrichtung nach Anspruch 1, **dadurch gekennzeichnet, dass** mittels relativer Bewegung der einzelnen paarweise gekoppelten Mitnehmer zueinander die Querverbindung höhenverstellbar ist.

4. Reihengruppierungseinrichtung nach Anspruch 1, **dadurch gekennzeichnet, dass** die höhenverstellbare Querverbindung mit vertikal angeordneten Ausrichtmitteln bestückt ist.

5. Reihengruppierungseinrichtung nach Anspruch 1, **dadurch gekennzeichnet, dass** die höhenverstellbare Querverbindung mit vertikal angeordneten Ausrichtnocken bestückt ist.
